# EUROPEAN PATENT SPECIFICATION

(11) **EP 3 001 802 B1**
(45) Date of publication and mention of the grant of the patent: **09.08.2017**
(21) Application number: 15730709.1
(22) Date of filing: 08.06.2015
(51) Int. Cl.: A47J 27/21

(54) **METHOD AND ARRANGEMENT FOR PREVENTING UNINTENDED SPILL OF LIQUID FROM A VESSEL**
VERFAHREN UND ANORDNUNG ZUR VERHINDERUNG EINES UNBEABSICHTIGTEN AUSTRITTS VON FLÜSSIGKEIT AUS EINEM BEHÄLTER
PROCÉDÉ ET AGENCEMENT POUR EMPÊCHER LE DÉVERSEMENT ACCIDENTEL DE LIQUIDE D'UN RÉCIPIENT

(30) Priority: 11.06.2014 EP 14171972
(43) Date of publication of application: 06.04.2016
(73) Proprietor: Koninklijke Philips N.V., 5656 AE Eindhoven (NL)
(72) Inventor: GEURTS, Lucas Jacobus Franciscus, 5656 AE Eindhoven (NL); BUIL, Vincentius Paulus, 5656 AE Eindhoven (NL)
(74) Representative: Uittenbroek, Arie Leendert
(86) International application number: PCT/EP2015/062707
(87) International publication number: WO 2015/189148

(56) References cited:
- JP-A- H10 179 398
- JP-A- 2003 259 978
- JP-A- 2006 247 428
- JP-A- 2010 088 604

## Description

### BACKGROUND OF THE INVENTION

### Field of the invention

The present invention relates to an arrangement comprising a vessel including means to prevent unintended spill of liquid stored in the vessel.

The present invention further relates to a method for preventing unintended spill of liquid from a vessel.

The present invention still further relates to a storage medium comprising a program that when executed by a programmable device performs the steps of this method.

### Related Art

When hot, cold or aggressive liquid are spilled this may impose a serious danger to persons involved.

JP2008-061795 discloses an electric cooker having a lid with a controllable lock. An external signal source, such as an IC tag, is used to control the controllable lock. In the absence of an external signal source, the controllable lock remains closed, so that it can be prevented that children inadvertently spill hot water and therewith would injure themselves.

Although the known arrangement improves safety, it may happen that the IC tag owner temporarily is not capable of properly holding the vessel due to health problems. Also the known arrangement involves a risk that small children get hold of the IC tag and therewith obtain inadvertent control over the arrangement.

### SUMMARY OF THE INVENTION

It is an object of the present invention to provide an arrangement including improved means to prevent unintended spill of liquid stored in the vessel.

In accordance therewith an arrangement is provided comprising a vessel for holding a liquid. The arrangement further comprises at least one of a controllable lock to controllably enable a release of said vessel from a support and a controllable lock to controllably enable opening of said vessel. The arrangement further comprises a controller to control the at least one controllable lock. The arrangement is provided with a sensor unit including at least one sensor to sense a mechanical interaction occurring when the vessel is gripped and to issue a sense signal that is indicative for said mechanical interaction. The controller controls the at least one controllable lock dependent on the sense signal.

The arrangement according to the present invention provides for an improved safety of possible users, as its operation is determined by the actual condition of the user that handles the vessel.

Various options are available to provide for a reliable estimation of the user's capability of handling the vessel without inadvertent spilling of liquid therefrom.

In an embodiment the at least one sensor is arranged in a handle for carrying the vessel and the at least one sensor is arranged to measure a contact area between a users hand and the handle, wherein the sense signal is indicative for a size of said contact area, and is compared with one or more safety conditions including a first threshold value and wherein the controller prevents unlocking of the controllable lock, therewith disabling release of said vessel from said support, if said indicated size is less than the first threshold value. Therewith it is prevented that a user releases the vessel from its support if s/he does not properly hold the vessel, or if s/he would not be capable of properly holding the vessel, for example in case of a child having too small hand to cover the required grip area. In an embodiment the at least one sensor is arranged in a handle for carrying the vessel and the at least one sensor is arranged to measure a magnitude of force exerted by a users hand on the handle, wherein the sense signal is indicative for the magnitude of said force, and is compared with one or more
safety conditions including a second threshold value and wherein the controller prevents unlocking of the controllable lock, therewith disabling release of said vessel from said support, if said indicated magnitude is less than the second threshold value. Therewith it is prevented that a user releases the vessel from its support if s/he does not firmly hold the vessel.

In particular embodiments the vessel may be provided with two or more handles, each provided with at least one contact sensor. The controller in that case prevents unlocking if it is not confirmed that the vessel is reliably held at each of those handles. The vessel may for example have two such handles, so that the user needs both hands to release the vessel form a support or to poor a liquid with the vessel. As an other example a vessel may be provided with four such handles, so that it has to be hold by two persons using both hands.

In an embodiment the at least one sensor is arranged to measure an amount of vibration, wherein the sense signal is indicative for amount of vibration and is compared with one or more safety conditions including a third threshold value and wherein the controller prevents unlocking of the controllable lock, therewith disabling release of said vessel from said support if said indicated amount exceeds the third threshold value. Therewith release of the vessel from the support is disabled if the person attempting to hold the vessel has an amount of tremor that would likely result in an unintended spill of liquid from the vessel if it were released from its support.

In an embodiment the at least one sensor is arranged to measure a magnitude of a force aiming to remove the vessel from the support, wherein the sense signal is indicative for the magnitude of said force and is compared with one or more safety conditions including a fourth threshold value and wherein the controller prevents unlocking of the controllable lock, therewith disabling release of said vessel from said support if said indicated magnitude is less than the fourth threshold value. Therewith the controller disables release of the vessel from the support if it appears that the person aiming to lift the vessel from the support has insufficient strength to stably hold the vessel.

In an embodiment the sense signal is compared with one or more safety conditions including a fifth threshold value greater than said fourth threshold value, wherein the controller prevents unlocking of the controllable lock, therewith disabling release of said vessel from said support if said indicated magnitude exceeds the exceeds the fifth threshold value. Therewith it is prevented that a user releases the vessel from its support with excessive force.

It is noted that two or more of the above-mentioned safety precautions may be combined. E.g. the arrangement may include two or more of a contact area sensor, a grip force sensor and a tremor sensor, and the controller may prevent a release until each of the safety conditions is met.

In an embodiment the controller does not enable unlocking of the controllable lock, until the one or more safety conditions are met during a predetermined consecutive minimum amount of time. As this allows for a more reliable assessment of the one or more safety conditions this renders it possible to apply less strict threshold values, so that despite this additional requirement the arrangement is more user friendly.

An embodiment of the arrangement according to the present invention further comprises a sensor to measure a property of the liquid inside the vessel and to issue a sense signal indicative for a value of said measured property and wherein the controller is arranged to adapt at least one safety condition of said one or more safety conditions depending on the value of said measured property indicated by the sense signal. The sensor is for example a weight sensor and the measured property is a weight of the liquid inside the vessel. In this way safety conditions may be moderated if the vessel only contains a modest amount of liquid. Alternatively, or in addition a temperature sensor may be provided to measure a temperature of the liquid inside the vessel. If the temperature sensor senses that the temperature of the liquid is lower than a temperature threshold value, the safety conditions may be alleviated or overruled.

In an embodiment the arrangement includes a facility for logging and/or analyzing the sense signals. In this way it can be determined if a health condition of the user improves or deteriorates and the safety conditions can be adapted accordingly. In urgent acute cases a health care professional may be alerted.

In case the apparatus is intended for use by more than one individual, the arrangement may be provided with a user identification unit for associating the sensed signals to an individual. In this way reliability of the logged data is increased.

For more user friendliness a feedback element may be provided that is coupled to the controller and arranged to indicate to the user whether the at least one safety condition is met. In this way the user is not surprised if the vessel can not be lifted or opened. The feedback element may additionally provide information how to meet the one or more safety conditions.

It is a further object of the present invention to provide to an improved method for preventing unintended spill of liquid from a vessel.

Accordingly, a method for preventing unintended spill of liquid from a vessel for holding a liquid, vessel being part of an arrangement comprising at least one of a controllable lock to controllably enable a release of said vessel from a support, and a controllable lock to controllably enable opening of said vessel. The method comprises the following steps.
- sensing a mechanical interaction occurring when gripping the vessel and
- issuing a sense signal that is indicative for said mechanical interaction,
- controlling said at least one controllable lock dependent on said sense signal.

According to a further aspect of the present invention a storage medium is provided that comprising a program that when executed by a programmable device performs the steps of this method.

### BRIEF DESCRIPTION OF THE DRAWINGS

These and other aspects are described in more detail with reference to the drawing. Therein:
FIG. 1 shows an example of an arrangement wherein the present invention may suitably be applied.
FIG. 2A, 2B schematically shows a first embodiment of an arrangement according to the present invention,
FIG. 3A, 3B schematically shows a second embodiment of an arrangement according to the present invention,
FIG. 4A, 4B schematically shows a third embodiment of an arrangement according to the present invention,
FIG. 5A, 5B schematically shows a fourth embodiment of an arrangement according to the present invention,
FIG. 6A, 6B schematically shows a fifth embodiment of an arrangement according to the present invention,
FIG. 7 schematically shows an example of a method according to the present invention,
FIG. 8 schematically shows a sixth embodiment of an arrangement according to the present invention.

### DETAILED DESCRIPTION OF EMBODIMENTS

Like reference symbols in the various drawings indicate like elements unless otherwise indicated.

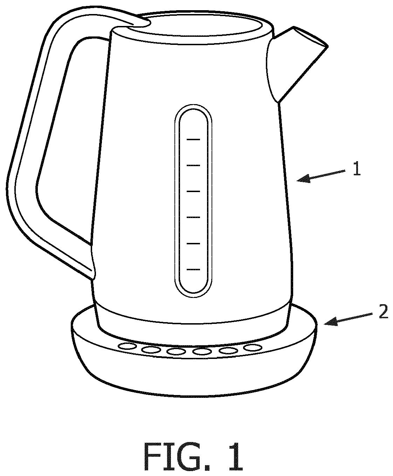

FIG. 1 shows an example of an arrangement wherein the present invention may suitably be applied. In this example the arrangement is a water cooker including a vessel 1 and a support 2.

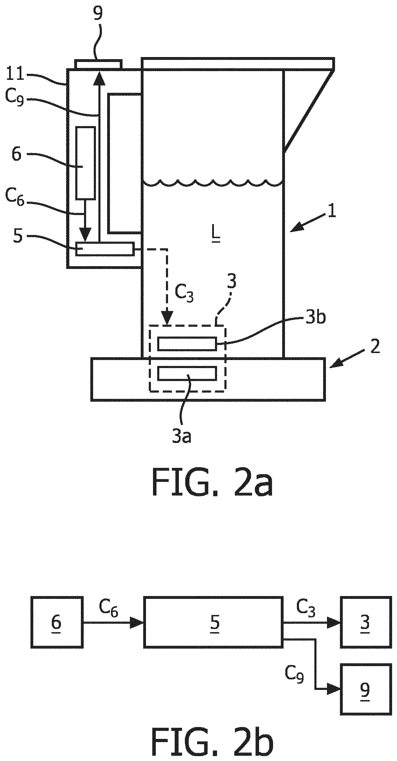

FIG. 2A, 2B schematically shows an example of such an arrangement including improved safety means according to the present invention. Therein FIG. 2A shows the vessel 1 comprising a liquid L and its support 2, and FIG. 2B schematically shows an embodiment of the control circuitry used therein.

In the embodiment shown in FIG 2A, 2B the arrangement comprises a controllable lock 3 to controllably enable a release of the vessel from the support 2. The lock 3 comprises mutually cooperating parts 3a, 3b, one of which is arranged in the vessel and one of which is arranged in the support. In the locked state the parts grip 3a, 3b grip into each other to prevent that the vessel is released from the support. Alternatively, magnetic means may be used to prevent release. The magnetic means may include permanent magnetic parts that are sufficiently strong to prevent a release, and an electro magnetic element to temporarily compensate the permanent magnetic field so as to allow release. The support should provide for sufficient stability to support the vessel, and be capable to prevent that the vessel is moved if it is not released by the controllable lock 3. The support may be itself of sufficient weight to provide stability and prevent that the vessel is moved. For example, the support may be part of a beverage preparation apparatus that is to too heavy to be moved unintentionally by the user. Alternatively the support may be a part that is adhered or mounted to a carrier, e.g. a wall, a counter, or a fridge door.

The arrangement further comprising a controller 5 to control the controllable lock 3. The arrangement is provided with a sensor unit 6 that includes at least one sensor to sense a mechanical interaction occurring when the vessel is gripped. In response thereto it issues a sense signal C₆ that is indicative for the mechanical interaction. Dependent on the sense signal C₆ and on one or more safety conditions the controller 5 controls the controllable lock 3 with a control signal C₃.

Various options are possible to generate the sense signal C₆. In the embodiment shown in FIG. 2A a sensor unit 6 is provided in a handle 11 for carrying the vessel 1. In an embodiment the sensor 6 is arranged to measure a contact area between a users hand and the handle 11. The sensor 6 may for example include a set of pressure sensitive elements arranged on a surface of the handle. In response thereto a sense signal C₆ is provided that is indicative for a size of the contact area. The sense signal may for example indicate which number of pressure sensitive elements senses a pressure. In this embodiment the one or more safety conditions include a first threshold value and the controller 5 prevents unlocking of the controllable lock if the indicated size is less than the first threshold value. For example the handle may be provided with 10 pressure sensitive elements and unlocking may be prevented if more than 3 of these 10 pressure sensitive elements do not sense a pressure. Therewith it is prevented that a user releases the vessel 1 from its support 2 if s/he does not properly hold the vessel. In order to facilitate the user in properly handling the vessel a feedback element 9, e.g. a light emitting element, is provided that is controlled by a signal C₉ and that indicates the user whether the lock 3 is released or not. Alternatively an audible signal or a sense signal may be used for this purpose, for example producing the sound of a clearly audible click or inducing a vibration in the handle upon unlocking the lock.

In another embodiment, the sensor is arranged to measure a magnitude of force exerted by a users hand on the handle. To that end the sensor 6 may comprise one or more pressure sensitive elements may be used that signal a magnitude of a force exerted thereon. In case more than one pressure sensitive element is used that each sense a force, the sense signal may indicate the average value or the minimum value of these forces as the magnitude. In this embodiment including the sensor to measure a magnitude of force the one or more safety conditions include a second threshold value and the controller prevents unlocking of the controllable lock if the indicated magnitude is less than the second threshold value. Therewith it is prevented that a user releases the vessel 1 from its support 2 if s/he does not firmly hold the vessel.

In again another embodiment the sensor 6 is arranged to measure an amount of vibration and the sense signal is indicative for amount of vibration. For this purpose an acceleration sensor may be used. Although a vibration/acceleration sensor is suitably arranged in the handle 11 it may also be arranged in another part of the vessel 1 or even in the support 2. The one or more safety conditions include a third threshold value and the controller prevents unlocking of the controllable lock if the indicated amount of vibration exceeds the third threshold value. Therewith release of the vessel from the support is disabled if the person attempting to hold the vessel has an amount of tremor that would likely result in an unintended spill of liquid from the vessel if it were released from its support.

It is noted that two or more of the above-mentioned safety precautions may be combined. E.g. the arrangement may include two or more of a contact area sensor, a grip force sensor and a tremor sensor, and the controller may prevent a release until each of the safety conditions is met.

As a further precaution the controller may include a timer to verify whether the one or more safety conditions are met during at least a minimum amount of time and prevent unlocking of the controllable lock until said one or more safety conditions are continuously met during that minimum amount of time.

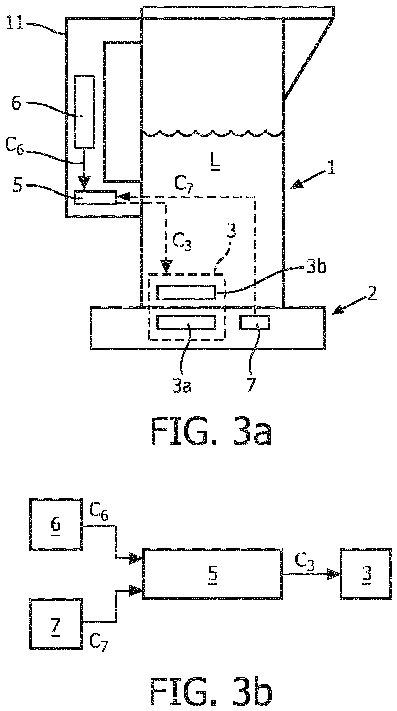

In an embodiment as shown in FIG. 3A, 3B the arrangement includes a sensor 7 that is arranged to measure a magnitude of a force aiming to remove the vessel from the support. The sense signal C₇ provided by the sensor 7 is indicative for the magnitude of the force. In this embodiment the one or more safety conditions include a fourth threshold value and the controller 5 prevents unlocking of the controllable lock if said indicated magnitude is less than the fourth threshold value. Therewith the controller disables release of the vessel 1 from the support 2 if it appears that the person aiming to lift the vessel 1 from the support has insufficient strength to stably hold the vessel 1. As shown in FIG. 3A, 3b, the sensor 7 may be combined with one or more other sensors, for example with a sensor 6 that measures a contact area, a grip force and/or a tremor and the controller 5 may disable releasing of the vessel if a combination of sense signals indicates that releasing the vessel would involve a safety risk. Also in this embodiment a timer means may be provided to determine if the required safety conditions are continuously met during a predetermined minimum amount of time.

In case that a person not familiar with the safety mechanism attempts to release the vessel by exerting an excessive force uncontrolled movements of the vessel could occur if the controllable vessel is unlocked. This may be prevented by properly instructing the user. Alternatively, the one or more safety conditions may include a fifth threshold value greater than said fourth threshold value. In this case the controller prevents unlocking of the controllable lock if the indicated magnitude exceeds the exceeds the fifth threshold value. Therewith it is prevented that a user release the vessel from its support with excessive force.

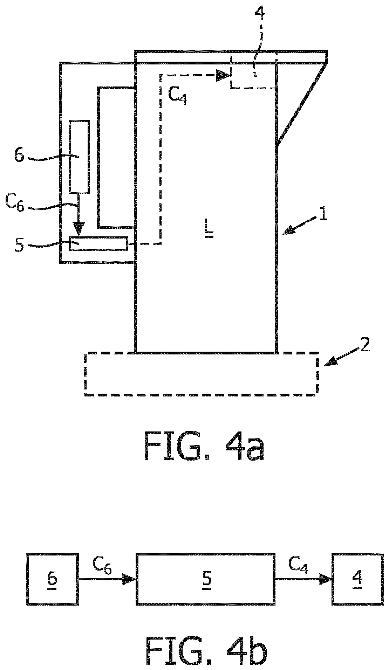

As an alternative safety measure, illustrated in FIG. 4A, 4B a controllable lock 4 may be provided to controllably enable opening of the vessel 1. As in the embodiments described with reference to FIG. 2A, 2B and 3A,3B arrangement is provided with a sensor unit 6 that includes at least one sensor to sense a mechanical interaction occurring when the vessel is gripped and to issue a sense signal C₆ that is indicative for the mechanical interaction. Likewise the controller issues a control signal C₄ to control the controllable lock 4 dependent on the sense signal C₆ and on one or more safety conditions. The safety conditions may include one or more of a minimum contact area, a minimum grip force, and a maximum amount of vibration as set out in detail for the embodiments shown in and described with reference to FIG. 2A, 2B and 3A,3B. Also additional safety conditions may be applicable, such as minimum time duration that one or more of the safety conditions are met. An embodiment as shown in FIG. 4A, 4B, only having a controllable lock 4 for controllably opening the vessel 1 has the advantage that a support for the vessel is not necessary. Therewith a support 2 (indicated by dotted lines) can be absent or of light-weight. Even if the situation occurs that a user turns out not to be capable of properly handling the vessel health risks are prevented as the lock for controllably opening the vessel is maintained into a locked state until it is detected that the vessel is reliably held. An additional orientation sensor may be provided, to provide a signal indicative of an orientation of the vessel, and the controller 5 may be arranged to control the lock 4 so as to keep the vessel closed if a tilt angle is detected that exceeds a value given a detected amount of liquid in the vessel 1. I.e. the larger the detected amount of liquid in the vessel the smaller the allowed tilt angle so that the liquid L cannot flow out of the vessel 1 at a too large rate, even if it is firmly held.

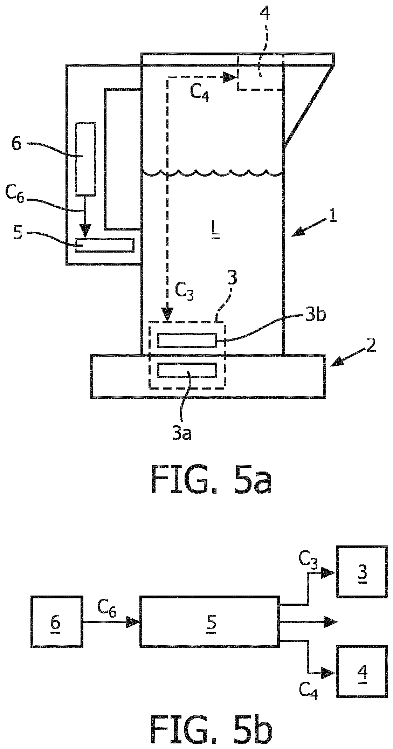

FIG. 5A, 5B shows an alternative embodiment, wherein the arrangement includes both a controllable lock 3 to controllably enable a release of the vessel from a support 2 and a controllable lock 4 to controllably enable opening of the vessel 1. In this embodiment the controllable lock 3 prevents a user from improperly releasing the vessel 1 from the support. In the inadvertent case that the user suffers from a sudden attack after releasing the vessel from the support the controllable lock 4 prevents opening of the vessel 1, and therewith provides for a complementary measure to prevent injuries. As the sudden release of control is a sign of a serious health problem a facility may be included that issues an alarm signal, for example to an alarm center to alert a caretaker.

The control signals C₃, C₄ for the controllable lock 3 to controllably enable a release of the vessel from its support 2 and for the controllable lock 4 to controllably enable opening of the vessel 1, may be identical. Alternatively, mutually different safety conditions may apply for issuing a control signal C₃ enabling a release of the vessel from its support 2 and for issuing a control signal C₄ enabling opening of the vessel 1.

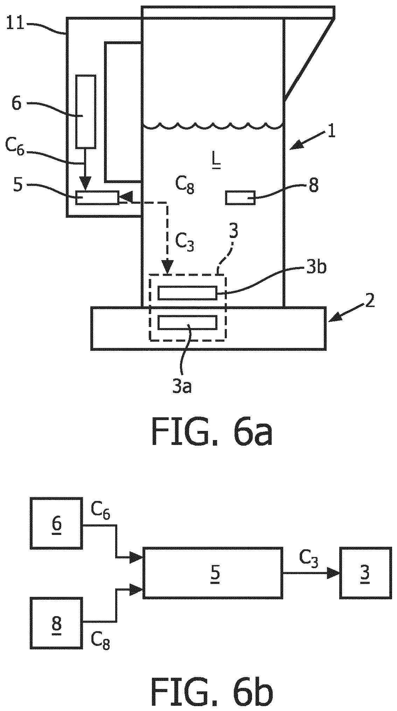

FIG. 6A, 6B illustrate a further embodiment. Therein further a sensor 8 is provided to measure a property of the liquid L inside the vessel 1 and to issue a sense signal C₈ indicative for a value of the measured property. The controller is arranged to adapt at least one safety condition of the one or more safety conditions depending on the value of said measured property indicated by the sense signal C₈.

In the embodiment shown the sensor is a temperature sensor 8 and the measured property is a temperature inside the vessel 1. For example, if the arrangement is a water cooker, the at least one safety condition may be adapted in that the lock 3 is maintained in an unlocked state if the detected temperature of the liquid is less than a temperature threshold value, e.g. 35 degrees C. Therewith the user is not hindered when aiming to fill (up) the vessel and the temperature of the remainder of water inside the water cooker would not be high enough to cause injuries.

As another example, the sensor may be a weight sensor and the measured property is a weight of the liquid L inside the vessel 1. The sensor 7 in the embodiment of FIG. 3A, 3B, may for example be arranged to sense this property. If the controller 5 checks a contact grip area as a safety condition, than the first threshold value for the contact area may be increased with an increasing value for the measured weight. Likewise, if the controller 5 checks a force exerted by a users hand, the second threshold value for that force may be increased with an increasing value for the measured weight. Similarly, if the controller 5 checks an amount of vibration then a third threshold value for the amount of vibration may be decreased with an increasing value for the measured weight. Likewise a fourth threshold value for a magnitude of a force aiming to lift the vessel may be increased with an increasing value for the measured weight.

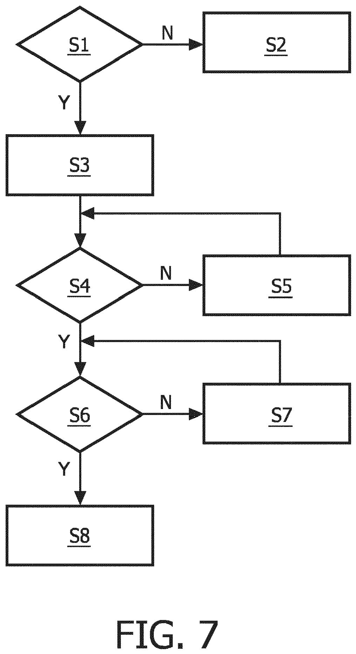

FIG. 7 illustrates a method for preventing unintended spill of liquid from a vessel 1 for holding a liquid L. The vessel is part of an arrangement that comprises a controllable lock 3 to controllably enable a release of the vessel from a support, and/or a controllable lock 4 to controllably enable opening of the vessel 1, for example according to one of the embodiments shown in FIG. 2A,2B up to FIG. 6A,6B. The method illustrated in FIG. 7 comprises the following steps.

In a first step S1 a temperature of a liquid L inside the vessel is measured. If it is determined that the temperature does not (N) exceed a threshold temperature, e.g. 35 degrees C, or no liquid is present inside the vessel 1, then in step S2 the controller 5 controls lock 3 and/or 4 in an unlocked mode so that the user can handle the vessel in an unrestricted manner. If it is determined that the temperature does (Y) exceed the threshold temperature the controller 5 by default sets lock 3 and/or 4 in an locked mode in step S3. In another embodiment the default state lock 3 and/or 4 may always be locked, regardless the temperature or other state of the liquid. However, the optional first step increases user friendliness while not jeopardizing user safety. It is noted however that in any case the lock 3 and/or 4 may have a locked fail safe state, for example realized by mechanical means so as to ensure that the lock 3 and/or 4 would be inadvertently released in case of a power failure for example.

In step S4 it determined whether or not the vessel is reliably held by a user. This determination may be based one or more of grip force detection, contact area detection and vibration detection as discussed above. If this is not the case (N) the lock(s) is/are not released. The detected lack of sufficient grip may be indicated to the user by a visual or audible signal in step S5. If it is detected (Y) that the user reliably holds the vessel, the method proceeds with step S6.

In step S6 it is detected whether or not the force exerted by the user aiming to lift the vessel from the support is sufficient to handle the vessel. Additionally, it may be determined whether or not this force is not too high. If the detected magnitude of the force complies (Y) with this/these safety requirement(s), the lock(s) is/are unlocked. Otherwise (N) the detected lack of sufficient lifting force or detected excessive lifting force may be indicated to the user in step S7, for example by a visual feedback, e.g. indicating how the currently allowed lifting force relates to the lower and optional upper bound for the lifting force. It is noted that one of the verification steps S4 and S6 may be absent. Although steps S6 is shown as a step subsequent to step S4, their order may be reversed. Alternatively, the verification of step S4 and of step S6 may take place simultaneously.

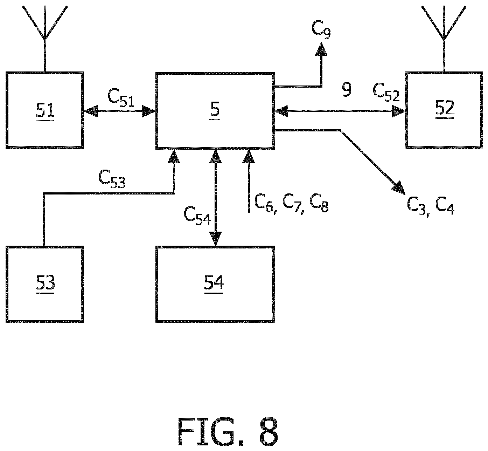

FIG. 8 shows additional optional features in an arrangement according to the present invention. For clarity therein some parts which were described with reference to the previous FIGs are not shown thereon.

As in the embodiments previously described, the controller 5 receives sense signals C₆ that is indicative for a mechanical interaction occurring when the vessel is gripped. Also the controller 5 may receive one or more additional signals, for example a sense signal C₇ indicative for an amount of liquid present in the vessel and/or a sense signal C₈ indicative for a temperature of the liquid. In response thereto the controller 5 issues signals C3 and/or C4, to control a controllable lock to controllably enable a release of the vessel from a support and/or a controllable lock to controllably enable opening of said vessel. Also the controller 5 may use a control signal C₉ to control visible, audible or sensible means to give feedback to the user about whether or not the one or more safety conditions are met and possibly informing the user what should change to meet the safety condition(s).

In addition the arrangement may comprise a facility 54 for logging and/or analyzing the sense signals. Information exchange between the logging/analyzing facility 54 and the controller 5 takes place by communication signals C₅₄. The logged content may for be examined by a healthcare profession to determine whether a health condition of the user is developing in a positive or negative sense. The logged content may also be used for adapting the one or more safety conditions. For example, if it appears from the logged data that the risk is too high that the user will be subject to an attack or stroke, the controller may strengthen the safety requirements to be met or even set the lock(s) into a locked state until a reset takes place. In the embodiment shown the controller is further coupled to a transceiver 52 and capable of exchanging communication signals C₅₂ therewith. In case it appears from an analysis of the sense signals that the health condition of the user is critical, this may be immediately reported to the health care professional. Alternatively or in addition the healthcare professional may inspect the logged contents via this transceiver at his/her own volition.

The arrangement may additionally include a user identification unit 53 to associating the sensed signals C₆ to the individual using the arrangement. The user identification unit 53 may determine the identity of the user from biometric data, e.g. by detection of the users fingerprints where the handle is gripped, or by recognizing patterns in a heart rate signal. The user identification unit 53 signals the controller by communication signals C₅₃. In case more than one user uses the arrangement, the controller can selectively associate the sensed signals C₆ with a respective user. Therewith the logged data is more reliable and an analysis thereof can provide a more accurate diagnosis of the individual.

Alternatively or additionally, the controller 5 may be coupled to a body coupled communication (BCC) transceiver 51 and capable of exchanging communication signals C₅₁ therewith. In this way the controller may for example recognize the user's identity by body coupled communication with an identity card worn by the user.

As will be apparent to a person skilled in the art, the elements listed in the claims are meant to include any hardware (such as separate or integrated circuits or electronic elements) or software (such as programs or parts of programs) which reproduce in operation or are designed to reproduce a specified function, be it solely or in conjunction with other functions, be it in isolation or in co-operation with other elements. The invention can be implemented by means of hardware comprising several distinct elements, and by means of a suitably programmed computer. In the apparatus claim enumerating several means, several of these means can be embodied by one and the same item of hardware.

'Computer program product' is to be understood to mean any software product stored on a computer-readable medium, such as a floppy disk, downloadable via a network, such as the Internet, or marketable in any other manner.

It will be understood that, although the terms first, second, third etc. may be used herein to describe various elements, components, modules and/or units, these elements, components, modules and/or units should not be limited by these terms. These terms are only used to distinguish one element, component, module and/or unit from another element, component, module and/or unit. Thus, a first element, component, module and/or unit discussed herein could be termed a second element, component, module and/or unit without departing from the teachings of the present invention.

As used herein, the terms "comprises," "comprising," "includes," "including," "has," "having" or any other variation thereof, are intended to cover a non-exclusive inclusion. For example, a process, method, article, or apparatus that comprises a list of elements is not necessarily limited to only those elements but may include other elements not expressly listed or inherent to such process, method, article, or apparatus. Further, unless expressly stated to the contrary, "or" refers to an inclusive or and not to an exclusive or. For example, a condition A or B is satisfied by any one of the following: A is true (or present) and B is false (or not present), A is false (or not present) and B is true (or present), and both A and B are true (or present).

Also, use of the "a" or "an" are employed to describe elements and components of the invention. This is done merely for convenience and to give a general sense of the invention. This description should be read to include one or at least one and the singular also includes the plural unless it is obvious that it is meant otherwise.

Unless otherwise defined, all technical and scientific terms used herein have the same meaning as commonly understood by one of ordinary skill in the art to which this invention belongs. Although methods and materials similar or equivalent to those described herein can be used in the practice or testing of the present invention, suitable methods and materials are described below. All publications, patent applications, patents, and other references mentioned herein are incorporated by reference in their entirety. In case of conflict, the present specification, including definitions, will control. In addition, the materials, methods, and examples are illustrative only and not intended to be limiting.

## Claims

1. Arrangement comprising a vessel (1) for holding a liquid, the arrangement further comprising at least one of a controllable lock (3) to controllably enable a release of said vessel from a support (2) and a controllable lock (4) to controllably enable opening of said vessel (1), the arrangement further comprising a controller (5) to control the at least one controllable lock, **characterized in that** the arrangement is provided with a sensor unit (6) including at least one sensor to sense a mechanical interaction occurring when the vessel is gripped and to issue a sense signal (C₆) that is indicative for said mechanical interaction, wherein said controller controls the at least one controllable lock (3,4) dependent on said sense signal (C₆).

2. Arrangement according to claim 1, wherein said at least one sensor is arranged in a handle (11) for carrying the vessel (1) and the at least one sensor is arranged to measure a contact area between a users hand and the handle, wherein the sense signal (C₆) is indicative for a size of said contact area, and is compared with one or more safety conditions including a first threshold value, and wherein the controller prevents unlocking of the controllable lock, therewith disabling release of said vessel from said support, if said indicated size is less than the first threshold value.

3. Arrangement according to claim 1, wherein said at least one sensor is arranged in a handle (11) for carrying the vessel and the at least one sensor (6) is arranged to measure a magnitude of force exerted by a users hand on the handle, wherein the sense signal is indicative for the magnitude of said force, and is compared with one or more safety conditions including a second threshold value, and wherein the controller prevents unlocking of the controllable lock, therewith disabling release of said vessel from said support, if said indicated magnitude is less than the second threshold value.

4. Arrangement according to claim 1, wherein said at least one sensor (6) is arranged to measure an amount of vibration, wherein the sense signal is indicative for amount of vibration, and is compared with one or more safety conditions including a third threshold value, and wherein the controller prevents unlocking of the controllable lock, therewith disabling release of said vessel from said support if said indicated amount exceeds the third threshold value.

5. Arrangement according to claim 1, wherein said at least one sensor (7) is arranged to measure a magnitude of a force aiming to remove the vessel from the support, wherein the sense signal is indicative for the magnitude of said force, and is compared with one or more safety conditions including a fourth threshold value, and wherein the controller prevents unlocking of the controllable lock, therewith disabling release of said vessel from said support if said indicated magnitude is less than the fourth threshold value.

6. Arrangement according to claim 5, **characterized in that** wherein the sense signal is compared with one or more safety conditions including a fifth threshold value greater than said fourth threshold value, wherein the controller prevents unlocking of the controllable lock, therewith disabling release of said vessel from said support if said indicated magnitude exceeds the exceeds the fifth threshold value.

7. Arrangement according to one of claims 2 to 6, characterized the controller does not enable unlocking of the controllable lock, until said one or more safety conditions are met during a predetermined consecutive minimum amount of time.

8. Arrangement according to one of the claims 2 to 7, further comprising a sensor (7,8) to measure a property of the liquid (L) inside the vessel (1) and to issue a sense signal (C₇, C₈) indicative for a value of said measured property and wherein the controller is arranged to adapt at least one safety condition of said one or more safety conditions depending on the value of said measured property indicated by the sense signal.

9. Arrangement according to claim 8, wherein the sensor is a weight sensor (7) and the measured property is a weight of the liquid (L) inside the vessel (1).

10. Arrangement according to claim 8, wherein the sensor is a temperature sensor (8) and the measured property is a temperature of the liquid (L) inside the vessel (1).

11. Arrangement according to one of the previous claims including a facility (54) for logging and/or analyzing the sense signals.

12. Arrangement according to claim 11, additionally including a user identification unit (53) for associating the sensed signals to an individual.

13. Arrangement according to claim 11 or 12, wherein said one or more safety conditions are adapted in accordance with said logged and analyzed signals.

14. Arrangement according to one of claims 2 to 13, further including a feedback element (9) coupled to the controller and arranged to indicate to the user whether the at least one safety condition is met.

15. Method for preventing unintended spill of liquid from a vessel (1) for holding a liquid (L), the arrangement comprising at least one of a controllable lock (3) to controllably enable a release of said vessel from a support, and a controllable lock (4) to controllably enable opening of said vessel (1), the method comprising
- sensing a mechanical interaction occurring when gripping the vessel and
- issuing a sense signal that is indicative for said mechanical interaction,
- controlling said at least one controllable lock dependent on said sense signal.

## Patentansprüche

1. Anordnung, die ein Gefäß (1) zum Enthalten einer Flüssigkeit umfasst, wobei die Anordnung ferner eine steuerbare Verriegelung (3) zum steuerbaren Ermöglichen einer Freigabe des Gefäßes von einer Stütze (2) und eine steuerbare Verriegelung (4) zum steuerbaren Ermöglichen eines Öffnens des Gefäßes (1) umfasst, wobei die Anordnung ferner eine Steuerung (5) zum Steuern der mindestens einen steuerbaren Verriegelung umfasst, **dadurch gekennzeichnet, dass** die Anordnung mit einer Sensoreinheit (6) versehen ist, die mindestens einen Sensor beinhaltet, um eine mechanische Wechselwirkung zu erfassen, die erfolgt, wenn das Gefäß gegriffen wird, und um ein Erfassungssignal (C₆) auszugeben, das die mechanische Wechselwirkung anzeigt, wobei die Steuerung die mindestens eine steuerbare Verriegelung (3,4) in Abhängigkeit vom Erfassungssignal (C₆) steuert.

2. Anordnung nach Anspruch 1, wobei der mindestens eine Sensor in einem Griff (11) zum Tragen des Gefäßes (1) angeordnet ist und der mindestens eine Sensor angeordnet ist, um einen Kontaktbereich zwischen der Hand eines Benutzers und dem Griff zu messen, wobei das Erfassungssignal (C₆) die Abmessung des Kontaktbereichs anzeigt und mit einer oder mehreren Sicherheitsbedingungen, einschließlich eines ersten Schwellenwertes, verglichen wird und wobei die Steuerung das Entriegeln der steuerbaren Verriegelung verhindert und dadurch die Freigabe des Gefäßes von der Stütze deaktiviert, wenn die angezeigte Abmessung geringer ist als der erste Schwellenwert.

3. Anordnung nach Anspruch 1, wobei der mindestens eine Sensor in einem Griff (11) zum Tragen des Gefäßes angeordnet ist und der mindestens eine Sensor (6) angeordnet ist, eine Größe einer Kraft, die von einer Hand eines Benutzers auf den Griff ausgeübt wird, zu messen, wobei das Erfassungssignal die Größe der Kraft anzeigt und mit einer oder mehreren Sicherheitsbedingungen, einschließlich eines zweiten Schwellenwertes, verglichen wird und wobei die Steuerung das Entriegeln der steuerbaren Verriegelung verhindert und dadurch die Freigabe des Gefäßes von der Stütze deaktiviert, wenn die angezeigte Größe geringer ist als der zweite Schwellenwert.

4. Anordnung nach Anspruch 1, wobei der mindestens eine Sensor (6) angeordnet ist, eine Menge Vibrationen zu messen, wobei das Erfassungssignal die Menge Vibrationen anzeigt und mit einer oder mehreren Sicherheitsbedingungen, einschließlich eines dritten Schwellenwertes, verglichen wird und wobei die Steuerung das Entriegeln der steuerbaren Verriegelung verhindert und dadurch die Freigabe des Gefäßes von der Stütze deaktiviert, wenn die angezeigte Menge den dritten Schwellenwert überschreitet.

5. Anordnung nach Anspruch 1, wobei der mindestens eine Sensor (7) angeordnet ist, eine Größe einer Kraft zu messen, um das Gefäß von der Stütze zu entfernen, wobei das Erfassungssignal die Größe der Kraft anzeigt und mit einer oder mehreren Sicherheitsbedingungen, einschließlich eines vierten Schwellenwertes, verglichen wird und wobei die Steuerung das Entriegeln der steuerbaren Verriegelung verhindert und dadurch die Freigabe des Gefäßes von der Stütze deaktiviert, wenn die angezeigte Größe geringer ist als der vierte Schwellenwert.

6. Anordnung nach Anspruch 5, **dadurch gekennzeichnet, dass**, das Erfassungssignal mit einer oder mehreren Sicherheitsbedingungen, einschließlich eines fünften Schwellenwertes, der größer als der vierte Schwellenwert ist, verglichen wird, wobei die Steuerung das Entriegeln der steuerbaren Verriegelung verhindert und dadurch die Freigabe des Gefäßes von der Stütze deaktiviert, wenn die angezeigte Größe den fünften Schwellenwert überschreitet.

7. Anordnung nach einem der Ansprüche 2 bis 6, **dadurch gekennzeichnet, dass**, die Steuerung die Entriegelung der steuerbaren Verriegelung erst aktiviert, wenn die eine oder die mehreren Sicherheitsbedingungen während einer vorbestimmten aufeinanderfolgenden minimalen Menge Zeit erfüllt sind.

8. Anordnung nach einem der Ansprüche 2 bis 7, die ferner einen Sensor (7,8) zum Messen einer Eigenschaft der Flüssigkeit (L) im Gefäß (1) und zum Ausgeben eines Erfassungssignals (C₇, C₈), das einen Wert der gemessenen Eigenschaft anzeigt, umfasst und wobei die Steuerung angeordnet ist, in Abhängigkeit von dem vom Erfassungssignal angezeigten Wert der Eigenschaft mindestens eine Sicherheitsbedingung der einen oder der mehreren Sicherheitsbedingungen anzupassen.

9. Anordnung nach Anspruch 8, wobei der Sensor ein Gewichtssensor (7) und die gemessene Eigenschaft ein Gewicht der Flüssigkeit (L) im Gefäß (1) ist.

10. Anordnung nach Anspruch 8, wobei der Sensor ein Temperatursensor (8) und die gemessene Eigenschaft eine Temperatur der Flüssigkeit (L) im Gefäß (1) ist.

11. Anordnung nach einem der vorhergehenden Ansprüche, die eine Einrichtung (54) zum Protokollieren und/oder Analysieren des Erfassungssignals beinhaltet.

12. Anordnung nach Anspruch 11, die zusätzlich eine Benutzeridentifikationseinheit (53) zum Verknüpfen des erfassten Signals mit einem Individuum beinhaltet.

13. Anordnung nach Anspruch 11 oder 12, wobei die eine oder die mehreren Sicherheitsbedingungen gemäß den protokollierten und analysierten Signalen angepasst werden.

14. Anordnung nach einem der Ansprüche 2 bis 13, die ferner ein Rückmeldungselement (9) beinhaltet, das an die Steuerung gekoppelt und angeordnet ist, dem Benutzer anzuzeigen, ob die mindestens eine Sicherheitsbedingung erfüllt ist.

15. Verfahren zum Verhindern des unbeabsichtigten Verschüttens von Flüssigkeit aus einem Gefäß (1) zum Enthalten einer Flüssigkeit (L), wobei die Anordnung mindestens eine steuerbare Verriegelung (3) zum steuerbaren Ermöglichen einer Freigabe des Gefäßes von einer Stütze und/oder eine steuerbare Verriegelung (4) zum steuerbaren Ermöglichen eines Öffnens des Gefäßes (1) umfasst, wobei das Verfahren Folgendes umfasst:
- Erfassen einer mechanischen Wechselwirkung, die erfolgt, wenn das Gefäß gegriffen wird, und
- Ausgeben eines Erfassungssignals, das die mechanische Wechselwirkung anzeigt,
- Steuern der mindestens einen steuerbaren Verriegelung in Abhängigkeit vom Erfassungssignal.

## Revendications

1. Agencement comprenant un récipient (1) permettant de contenir un liquide, l'agencement comprenant en outre au moins un d'un verrouillage contrôlable (3) pour autoriser de manière contrôlable une libération dudit récipient à partir d'un support (2) et d'un verrouillage contrôlable (4) pour autoriser de manière contrôlable l'ouverture dudit récipient (1), l'agencement comprenant en outre un contrôleur (5) pour contrôler l'au moins un verrouillage contrôlable, **caractérisé en ce que** l'agencement est muni d'une unité à capteur (6) comprenant au moins un capteur pour détecter une interaction mécanique se produisant lorsque le récipient est saisi et pour émettre un signal de détection (C₆) qui indique ladite interaction mécanique, dans lequel ledit contrôleur contrôle l'au moins un verrouillage contrôlable (3, 4) en fonction dudit signal de détection (C₆).

2. Agencement selon la revendication 1, dans lequel ledit au moins un capteur est agencé dans une poignée (11) permettant de porter le récipient (1) et l'au moins un capteur est agencé pour mesurer une zone de contact entre une main d'utilisateur et la poignée, dans lequel le signal de détection (C₆) indique une grandeur de ladite zone de contact, et est comparé à une ou plusieurs conditions de sécurité incluant une première valeur seuil, et dans lequel le contrôleur empêche le déverrouillage du verrouillage contrôlable, interdisant ainsi la libération dudit récipient à partir dudit support, si ladite grandeur indiquée est inférieure à la première valeur seuil.

3. Agencement selon la revendication 1, dans lequel ledit au moins un capteur est agencé dans une poignée (11) permettant de porter le récipient et l'au moins un capteur (6) est agencé pour mesurer une ampleur de la force exercée par une main d'utilisateur sur la poignée, dans lequel le signal de détection indique l'ampleur de ladite force, et est comparé à une ou plusieurs conditions de sécurité incluant une deuxième valeur seuil, et dans lequel le contrôleur empêche le déverrouillage du verrouillage contrôlable, interdisant ainsi la libération dudit récipient à partir dudit support, si ladite ampleur indiquée est inférieure à la deuxième valeur seuil.

4. Agencement selon la revendication 1, dans lequel ledit au moins un capteur (6) est agencé pour mesurer une quantité de vibration, dans lequel le signal de détection indique une quantité de vibration, et est comparé à une ou plusieurs conditions de sécurité incluant une troisième valeur seuil, et dans lequel le contrôleur empêche le déverrouillage du verrouillage contrôlable, interdisant ainsi la libération dudit récipient à partir dudit support si ladite quantité indiquée est supérieure à la troisième valeur seuil.

5. Agencement selon la revendication 1, dans lequel ledit au moins un capteur (7) est agencé pour mesurer une ampleur d'une force visant à ôter le récipient du support, dans lequel le signal de détection indique l'ampleur de ladite force, et est comparé à une ou plusieurs conditions de sécurité incluant une quatrième valeur seuil, et dans lequel le contrôleur empêche le déverrouillage du verrouillage contrôlable, interdisant ainsi la libération dudit récipient à partir dudit support si ladite ampleur indiquée est inférieure à la quatrième valeur seuil.

6. Agencement selon la revendication 5, **caractérisé en ce que** le signal de détection est comparé à une ou plusieurs conditions de sécurité incluant une cinquième valeur seuil supérieure à ladite quatrième valeur seuil, dans lequel le contrôleur empêche le déverrouillage du verrouillage contrôlable, interdisant ainsi la libération dudit récipient à partir dudit support si ladite ampleur indiquée est supérieure à la cinquième valeur seuil.

7. Agencement selon l'une des revendications 2 à 6, **caractérisé en ce que** le contrôleur n'autorise pas le déverrouillage du verrouillage contrôlable, jusqu'à ce que lesdites une ou plusieurs conditions de sécurité soient remplies pendant un laps de temps minimal consécutif prédéterminé.

8. Agencement selon l'une des revendications 2 à 7, comprenant en outre un capteur (7, 8) pour mesurer une propriété du liquide (L) à l'intérieur du récipient (1) et pour émettre un signal de détection (C₇, C₈) indiquant une valeur de ladite propriété mesurée et dans lequel le contrôleur est agencé pour adapter au moins une condition de sécurité desdites une ou plusieurs conditions de sécurité en fonction de la valeur de ladite propriété mesurée indiquée par le signal de détection.

9. Agencement selon la revendication 8, dans lequel le capteur est un capteur de poids (7) et la propriété mesurée est un poids du liquide (L) à l'intérieur du récipient (1).

10. Agencement selon la revendication 8, dans lequel le capteur est un capteur de température (8) et la propriété mesurée est une température du liquide (L) à l'intérieur du récipient (1).

11. Agencement selon l'une des revendications précédentes comprenant une installation (54) permettant de journaliser et/ou d'analyser les signaux de détection.

12. Agencement selon la revendication 11, comprenant en plus une unité d'identification d'utilisateur (53) permettant d'associer les signaux détectés à un individu.

13. Agencement selon la revendication 11 ou 12, dans lequel lesdites une ou plusieurs conditions de sécurité sont adaptées conformément auxdits signaux journalisés et analysés.

14. Agencement selon l'une des revendications 2 à 13, comprenant en outre un élément de rétroaction (9) couplé au contrôleur et agencé pour indiquer à l'utilisateur si l'au moins une condition de sécurité est remplie.

15. Procédé permettant d'éviter le déversement involontaire de liquide à partir d'un récipient (1) permettant de contenir un liquide (L), l'agencement comprenant au moins un d'un verrouillage contrôlable (3) pour autoriser de manière contrôlable une libération dudit récipient à partir d'un support, et d'un verrouillage contrôlable (4) pour autoriser de manière contrôlable l'ouverture dudit récipient (1), le procédé comprenant
- la détection d'une interaction mécanique se produisant lors de la saisie du récipient et
- l'émission d'un signal de détection qui indique ladite interaction mécanique,
- le contrôle dudit au moins un verrouillage contrôlable en fonction dudit signal de détection.
